# EUROPEAN PATENT APPLICATION

(11) **EP 4 462 862 A1**
(43) Date of publication of application: **13.11.2024**
(21) Application number: 22917709.2
(22) Date of filing: 04.01.2022
(51) Int. Cl.: H04W 36/00

(54) **IAB NODE DEVICE, IAB DONOR DEVICE, AND TOPOLOGICAL REGRESSION METHOD**

(71) Applicant: FUJITSU LIMITED, Kawasaki-shi, Kanagawa 211-8588 (JP)
(72) Inventor: LU, Yang, Beijing 100022 (CN)
(74) Representative: Haseltine Lake Kempner LLP
(86) International application number: PCT/CN2022/070174
(87) International publication number: WO 2023/130231

(57) **Abstract**

Embodiments of the present disclosure provide an IAB-node device, an IAB-donor device and a topology regression method. A transmission path of an uplink service of an IAB-node is migrated from a second donor centralized unit back to a first donor centralized unit, after being migrated from the first donor centralized unit to the second donor centralized unit, and the method includes: the IAB-node or a child node receives a path migration configuration of uplink data transmitted by a network device; and the IAB-node or the child node apply the path migration configuration, wherein an IAB-DU of the IAB-node maintains F1 connection with the first donor-CU.

## Description

### TECHNICAL FIELD

The embodiments of the present disclosure relate to the communication field.

### BACKGROUND

Future seamless cellular network deployment requires very flexible and ultra-dense new radio (NR) cell deployment, an ultra-dense network is one of goals of 5G, and deploying NR network that does not require wired backhaul is very important to realize the ultra-dense network of 5G. Because a 5G millimeter wave reduces a coverage of a cell, a wireless self-backhaul system needs multi-hops to meet deployment requirements. 5G's high bandwidth, massive Multiple Input Multiple Output (MIMO) and beam system enables it easier to develop a wireless self-backhaul system of an ultra-dense NR cell for 5G than for LTE. In order to develop such multi-hop system with wireless self-backhaul, 3GPP starts research and standardization of an Integrated Access and Backhaul (IAB) project at Rel-16.

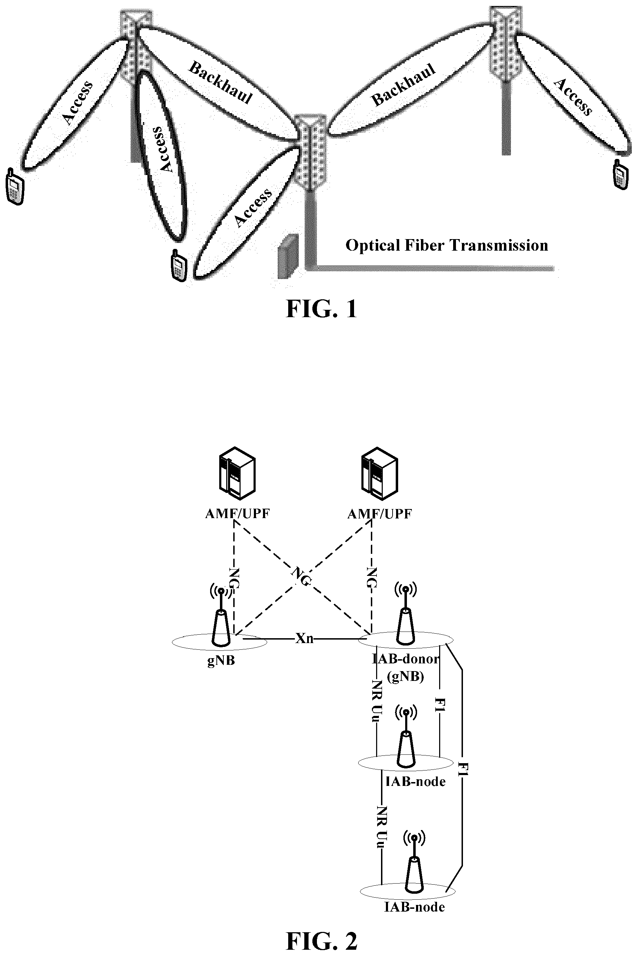

FIG. 1 is a schematic diagram of an IAB system. As shown in FIG. 1, in the IAB system, wireless transmission on Uu air interface of NR is used for access and backhaul, a relay node simultaneously supports both access and backhaul functions. The relay node multiplexes an access link and a backhaul link in a time domain, a frequency domain or a space domain, and the access link and the backhaul link may use the same or different frequency bands.

In an IAB network architecture, the relay node refers to an IAB-node (IAB node) that simultaneously supports both access and backhaul functions. A last-hop access node at a network side is called IAB-donor (IAB host) that supports a gNB function and supports IAB-node access. All UE data may be backhauled to the IAB-donor via the IAB-node in one or more hops.

The function of the IAB-node includes two parts, one is a gNB-DU function, called IAB-DU (a distributed unit), and the other is a UE function, called IAB-MT (a mobile terminal). The IAB-DU realizes a function of a network side device, is connected to a downstream child IAB-node (child IAB node or called a child node for short), provides NR air interface access for a UE and the downstream child IAB-node, and establishes an F1 connection with IAB donor-CU (a donor centralized unit). The IAB-MT realizes a partial function of a terminal equipment, is connected to an upstream parent IAB-node (parent IAB node or called a parent node for short) or IAB-donor DU. The IAB-MT includes functions of a physical layer, a layer 2, Radio Resource Control (RRC) and a Non-Access Stratum (NAS) layer, and is further connected to the IAB Donor-CU and a Core Network (CN) indirectly.

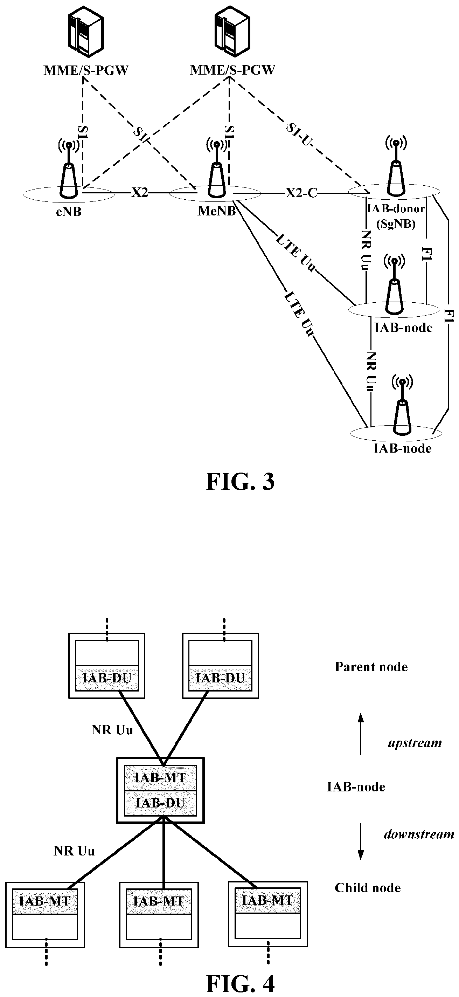

In the IAB system, the IAB-node may be accessed to a network by using a Standalone (SA) mode or an E-UTRA-NRDualConnectivity (EN-DC) mode. FIG. 2 is a schematic diagram of an IAB architecture in the SA mode. FIG. 3 is a schematic diagram of an IAB architecture in the EN-DC mode.

FIG. 4 is a schematic diagram of an IAB node (IAB-node), a parent node (parent IAB-node) and a child node (child IAB-node). As shown in FIG. 4, IAB-DU of the IAB node as a network side connects to IAB-MT of the child node, and the IAB-MT of the IAB node as a terminal side connects to the IAB-DU of the parent node.

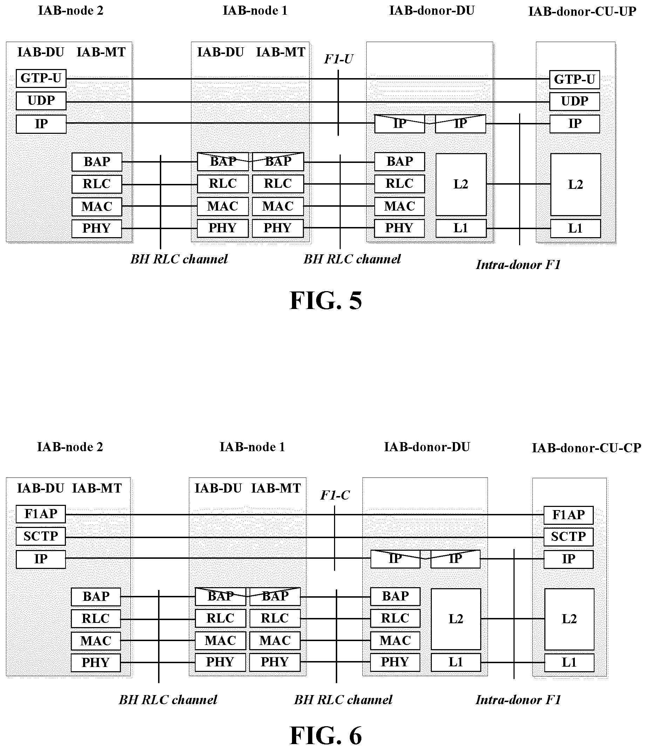

FIG. 5 is a schematic diagram of an F1 user plane (F1-U) protocol stack between the IAB-DU and the IAB-donor CU. FIG. 6 is a schematic diagram of an F1 control plane (F1-C) protocol stack between the IAB-DU and the IAB donor-CU. As shown in FIGS. 5 and 6, the F1-U and the F1-C are established on a transmission (IP) layer between the IAB-DU and the IAB donor-CU, FIGS. 5 and 6 show two-hops wireless backhaul and one-hop wired backhaul.

On a backhaul link, the transmission (IP) layer is carried on a backhaul adaptation protocol (BAP) sublayer, a BAP entity in the IAB-node implements a routing function in the IAB system, the IAB donor-CU provides a routing table. A BAP PDU (Protocol Data Unit) is transmitted in an RLC (Radio Link Control) channel of the backhaul link, multiple RLC channels of the backhaul link may be configured by the IAB-donor to carry services with different priorities and QoS (Quality of Service), the BAP PDU is mapped by the BAP entity to different backhaul RLC channels.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

### SUMMARY

The inventor finds that a migrating node may be migrated from a network topological domain of a target donor-CU back to a network topological domain of a source donor-CU, after being migrated from the network topological domain of the source donor-CU to the network topological domain of the target donor-CU, which may be called topology regression. The migrating node may change a donor-DU after the topology regression, as a result, uplink data of the migrating node cannot be transmitted to the donor-CU. In addition, if the donor-DU after the topology regression has an IP address filtering function, uplink data containing an IP address assigned by the donor-DU before the topology regression will be discarded, thus resulting in a longer transmission delay and service interruption time.

In order to solve at least one of the above problems, the embodiments of the present disclosure provide an IAB-node device, an IAB-donor device and a topology regression method.

According to one aspect of the embodiments of the present disclosure, a topology regression method is provided, a transmission path of an uplink service of an IAB-node is migrated from a second donor centralized unit back to a first donor centralized unit, after being migrated from the first donor centralized unit (donor-CU) to the second donor centralized unit, and the method includes:
an IAB-node or child node receives a path migration configuration of uplink data transmitted by a network device; and
the IAB-node or child node applies the path migration configuration;
wherein an IAB-DU of the IAB-node maintains F1 connection with the first donor-CU.

According to another aspect of the embodiments of the present disclosure, an IAB-node device is provided, a transmission path of its uplink service is migrated from a second donor centralized unit back to a first donor centralized unit, after being migrated from the first donor centralized unit to the second donor centralized unit, and the device includes:
a receiving portion configured to receive a path migration configuration of uplink data transmitted by a network device; and
a processing portion configured to apply the path migration configuration, wherein an IAB-DU of an IAB-node maintains F1 connection with the first donor centralized unit.

According to another aspect of the embodiments of the present disclosure, a topology regression method is provided, a transmission path of an uplink service of an IAB-node is migrated from a second donor centralized unit back to a first donor centralized unit, after being migrated from the first donor centralized unit (donor-CU) to the second donor centralized unit, and the method includes:
the first donor-CU receives a topology regression request transmitted by the second donor-CU; and
the first donor-CU transmits a path migration configuration of uplink data;
wherein an IAB-DU of the IAB-node maintains F1 connection with the first donor-CU.

According to another aspect of the embodiments of the present disclosure, an IAB-donor device is provided, a transmission path of an uplink service of an IAB-node is migrated from a second donor centralized unit back to a first donor centralized unit, after being migrated from the first donor centralized unit to the second donor centralized unit, and the device includes:
a receiving portion configured to receive a topology regression request transmitted by the second donor centralized unit; and
a transmitting portion configured to transmit a path migration configuration of uplink data;
wherein an IAB-DU of the IAB-node maintains F1 connection with the first donor centralized unit.

According to another aspect of the embodiments of the present disclosure, an IAB system is provided, including an IAB-donor device and an IAB-node device;
a transmission path of an uplink service of the IAB-node device being migrated from a second donor centralized unit back to a first donor centralized unit, after being migrated from the first donor centralized unit to the second donor centralized unit; wherein the IAB-node device receives a path migration configuration of uplink data transmitted by a network device, and applies the path migration configuration, wherein an IAB-DU of the IAB-node maintains F1 connection with the first donor centralized unit.

One of advantageous effects of the embodiments of the present disclosure lies in: an IAB-node or a child node receives a path migration configuration of uplink data transmitted by a network device; and the IAB-node or the child node apply the path migration configuration, wherein an IAB-DU of the IAB-node maintains F1 connection with the first donor-CU. Thereby, the problem that uplink data is discarded may be reduced or avoided, a transmission delay and service interruption time is reduced.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended supplements, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on the drawings under the premise that they do not pay inventive labor. In the drawings:
FIG. 1 is a schematic diagram of an IAB system;
FIG. 2 is a schematic diagram of an IAB architecture in a SA mode;
FIG. 3 is a schematic diagram of an IAB architecture in an EN-DC mode;
FIG. 4 is a schematic diagram of a parent node (parent IAB-node) and a child node (child IAB-node);
FIG. 5 is a schematic diagram of an F1-U protocol stack of the IAB system;
FIG. 6 is a schematic diagram of an F1-C protocol stack of the IAB system;
FIG. 7 is a schematic diagram of IAB system routing;
FIG. 8 is a schematic diagram of network topology adaptation;
FIG. 9 is a schematic diagram of topology regression in the embodiments of the present disclosure;
FIG. 10 is another schematic diagram of topology regression in the embodiments of the present disclosure;
FIG. 11 is a schematic diagram of a topology regression method in the embodiments of the present disclosure;
FIG. 12 is an exemplary diagram of topology regression in the embodiments of the present disclosure;
FIG. 13 is another exemplary diagram of topology regression in the embodiments of the present disclosure;
FIG. 14 is a signaling flow graph of topology regression in the embodiments of the present disclosure;
FIG. 15 is another signaling flow graph of topology regression in the embodiments of the present disclosure;
FIG. 16 is a schematic diagram of an IAB-node device in the embodiments of the present disclosure;
FIG. 17 is a schematic diagram of an IAB-donor device in the embodiments of the present disclosure;
FIG. 18 is a schematic diagram of an IAB device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached supplements.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

A routing function of an IAB system is implemented by a BAP layer, each IAB-node stores a routing configuration (BH routing configuration) and an RLC channel mapping configuration (BH RLC Channel Mapping Configuration). A BAP entity performs routing according to the routing configuration, the RLC channel mapping configuration, and a routing identifier (Routing ID) in a BAP layer data packet header. The Routing ID contains a destination BAP address and a path identifier.

The routing configuration contains a mapping relationship between the Routing ID and a BAP address of a next-hop node. The RLC channel mapping configuration contains a mapping relationship among a BAP address of a prior-hop node, an ingress link RLC channel ID, a BAP address of a next-hop node and an egress link RLC channel ID.

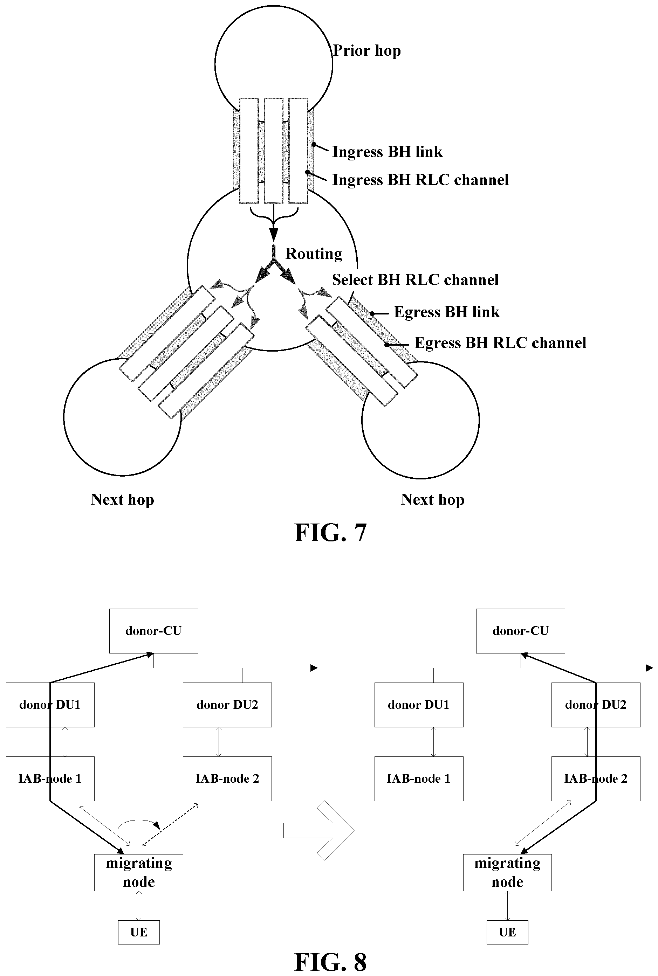

FIG. 7 is a schematic diagram of IAB system routing. As shown in FIG. 7, for each data packet, a BAP address of a next-hop node may be found from a routing configuration via a routing ID of a data packet header. A BAP address of a prior-hop node and an ingress link RLC channel ID are all known. In this way, after the BAP address of the next-hop node is determined, an egress link RLC channel ID can be found via an RLC channel mapping configuration according to the BAP address of the prior-hop node + the ingress link RLC channel ID + the BAP address of the next-hop node.

The IAB-donor DU stores a routing configuration (BH routing configuration) and a downlink RLC channel mapping configuration (Downlink Traffic to BH RLC Channel Mapping Configuration). The IAB-donor DU performs routing according to the routing configuration, the RLC channel mapping configuration, and Routing ID in a BAP layer data packet header. The routing configuration contains a mapping relationship between the Routing ID and an address of a next-hop node. The downlink RLC channel mapping configuration contains a mapping relationship among a target IP address, a Differentiated Services Code Point (DSCP), an address of a next-hop node and an egress link RLC channel ID.

For each downlink data packet that reaches the IAB-donor DU, the IAB-donor DU may find an address of a next-hop node from a routing configuration according to Routing ID in a data packet header. In this way, after the address of the next-hop node is determined, an egress link RLC channel ID is found from the downlink RLC channel mapping configuration according to an IP address of a data packet, and the DSCP.

The above text schematically describes routing of an IAB system, the following text describes updating of a network topology of the IAB system. Rel-16 NR has standardized a process of topology adaptation when an IAB-node moves under the same donor-CU.

FIG. 8 is a schematic diagram of intra-CU topology adaptation. When an IAB-node changes a parent node (changing from IAB-node 1 to IAB-node 2), the donor-CU configures a configuration related to path migration for the IAB-node via an RRC reconfiguration message, so that the IAB-node performs migration of an F1 transmission path.

A configuration related to path migration includes updating a default BH RLC channel of uplink F1-C, F1-U and non-F1 data, updating a default BAP routing ID, and updating an IP address routed to a Donor-DU. When the IAB-node is accessed to a new parent node, the IAB-node starts to apply the configuration related to path migration. For a child node of the IAB-node, the configuration related to path migration is carried out also using the same method.

3GPP R17 supports topology adaptation of the IAB-node when it moves under different donor-CUs, a migrating node may be handed over from a parent node served by the source donor-CU (which may be also called an F1-terminating CU or a first donor-CU) to a parent node served by the target donor-CU (which may be also called a non-F1-terminating CU or a second donor-CU).

After the migrating node is handed over from the F1-terminating CU to the non-F1-terminating CU, only the RRC connection of an IAB-MT is handed over to the non-F1-terminating CU, the F1 interface still belongs to the F1-terminating CU, the RRC connections of a child node and a UE it serves still belong to the F1-terminating CU, and at this case, the migrating node may also be called a boundary node.

Routing IDs of F1 and non-F1 data of the boundary node and a routing ID of F1 or non-F1 data of the child node may remain unchanged, but the boundary node needs to replace an original routing ID of an uplink service with a target routing ID. The original routing ID belongs to a topological domain of the F1-terminating CU and its destination BAP address is the original donor-DU under the F1-terminating CU, a routing ID after replacement belongs to a topological domain of the non-F1-terminating CU and its destination BAP address is the target donor-DU under the non-F1-terminating CU.

In addition, the boundary node may be handed over from the non-F1-terminating CU back to the F1-terminating CU, that is, performs topology regression. When the boundary node is handed over back to the F1-terminating CU, the boundary node no longer needs to replace the original routing ID with the routing ID of the non-F1-terminating CU domain, but needs to have a routing configuration for the original routing ID and a BH RLC channel mapping configuration from the boundary node to a parent node at the F1-terminating CU side.

The inventor finds that when the boundary node is handed over back to the F1-terminating CU, if the donor-DU of the F1-terminating CU has an IP address filtering function, uplink data carrying an IP address assigned by the donor-DU of the non-F1-terminating CU side cannot be transmitted to the donor-CU, thereby resulting in longer transmission delay and service interruption time.

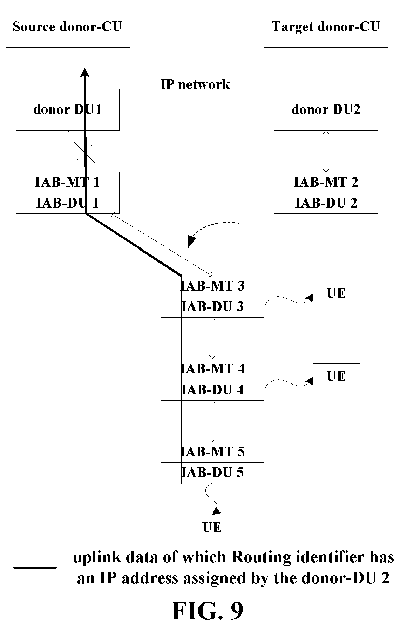

FIG. 9 is a schematic diagram of topology regression in the embodiments of the present disclosure. As shown in FIG. 9, after the IAB-node 3 migrates from the donor-DU 1 of the source donor-CU to the donor-DU 2 of the target donor-CU, the IAB-node 3 regresses from the donor-DU 2 of the target donor-CU to the donor-DU 1 of the source donor-CU. If the donor-DU 1 of the source donor-CU has an IP address filtering function, uplink data carrying an IP address assigned by the donor-CU 2 of the target donor-CU side cannot be transmitted to the source donor-CU, since it is discarded by the donor-DU 2 of the source donor-CU side. The discarded uplink data will be retransmitted by a UE, resulting in a longer transmission delay and service interruption time.

Moreover, the inventor further finds that when the boundary node is handed over back to the F1-terminating CU, if a donor-DU after boundary node is handed over is different from the original donor-DU, uplink data generated by the migrating node and the child node according to the original routing ID cannot be transmitted to the F 1-terminating CU, thereby resulting in longer transmission delay and service interruption time.

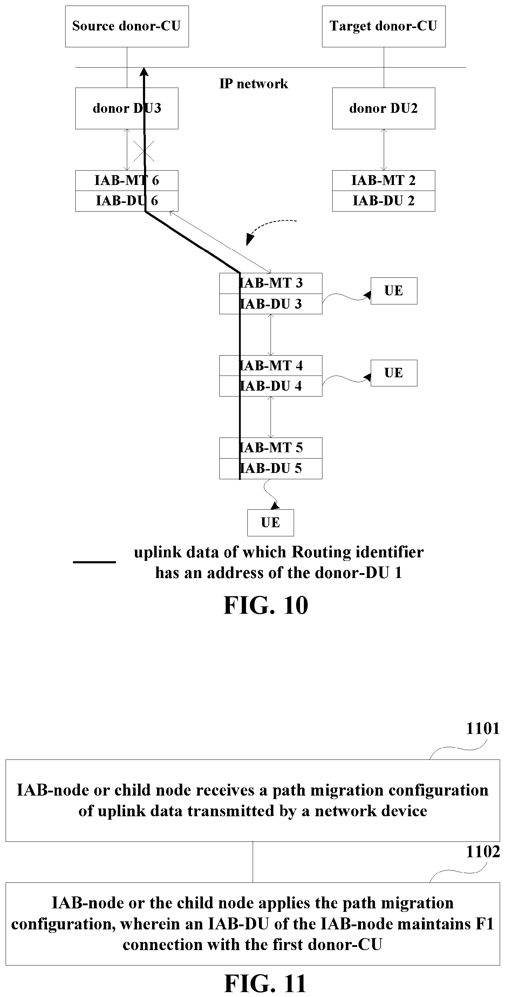

FIG. 10 is another schematic diagram of topology regression in the embodiments of the present disclosure. As shown in FIG. 10, after the IAB-node 3 migrates from the donor-DU 1 of the source donor-CU to the donor-DU 2 of the target donor-CU, the IAB-node 3 regresses from the donor-DU 2 of the target donor-CU to the donor-DU 3 of the source donor-CU. If the donor-DU 3 after handover is different from the original donor-DU 1, uplink data generated by the migrating node and the child node according to the original routing ID cannot be transmitted to the source donor-CU. The reason is that the uplink data generated according to the original routing ID carries a BAP address of the donor-DU 1, which is different from the BAP address of the donor-DU 3, such uplink data will be discarded by the target donor-DU 3. The discarded uplink data will be retransmitted by a UE, resulting in a longer transmission delay and service interruption time.

For at least one of the above or similar problems, before an IAB-MT of an IAB-node is handed over from the second donor-CU back to the first donor-CU or after it is handed over back to the first donor-CU, the IAB-node or child node in the embodiments of the present disclosure receives path migration configuration of uplink data transmitted by a network device, which will be described below in detail. In the embodiments of the present disclosure, unless otherwise specified, the migrating node is an IAB-node, an IAB-node device includes an IAB-node or its child node.

### Embodiments of a first aspect

The embodiments of the present disclosure provide a topology regression method, which is described from an IAB-node or child node side. A transmission path of an uplink service of an IAB-node is migrated from a second donor centralized unit back to a first donor centralized unit (donor-CU), after being migrated from the first donor centralized unit to the second donor centralized unit.

FIG. 11 is a schematic diagram of a topology regression method in the embodiments of the present disclosure. As shown in FIG. 11, the method includes:
1101, an IAB-node or child node receives a path migration configuration of uplink data transmitted by a network device; and
1102, the IAB-node or the child node apply the path migration configuration, wherein an IAB-DU of the IAB-node maintains F1 connection with the first donor-CU.

It should be noted that the above FIG. 11 is only schematic description of the embodiments of the present disclosure, but the present disclosure is not limited to this. For example, an execution step of each operation can be adjusted appropriately, moreover other some operations can be increased or reduced. Persons skilled in the art may make appropriate modifications according to the above contents, not limited to the records in the above FIG. 11.

The following text describes the cases in which a transmission path of an uplink service (including F1-C, F1-U and non-F1 services) of an IAB-node is migrated from a first donor centralized unit (donor-CU) to a second donor centralized unit.

When the uplink service of the IAB-node is migrated from the F1-terminating CU to the non-F1-terminating CU, a network device will configure a mapping relationship between the original routing ID and the target routing ID i.e., inter-donor centralized unit routing identifier rewriting configuration (BAP Header Rewriting Information) to the IAB-node.

After that, when forwarding uplink data, the IAB-node replaces the original routing ID with the target routing ID. Since the target routing ID belongs to the non-F1-terminating CU domain, the IAB-node needs to perform routing selection according to the target routing ID and routing information of the topological domain of the target donor-CU. Therefore, the network device will configure to the IAB-node the routing information of a BAP address of a next-hop node belongs to the topological domain of non-F1-terminating CU (in the routing information before path migration, a BAP address of a next-hop node of an egress link belongs to the topological domain of the F1-terminating CU).

A BAP address of a prior-hop node of the IAB-node belongs to the topological domain of the F1-terminating CU, a BAP address of a next-hop node belongs to the topological domain of non-F1-terminating CU, thus the network device will reconfigure RLC channel mapping information in the IAB-node (in RLC channel mapping information before path migration, both an address of a prior-hop node and an address of a next-hop node belong to the topological domain of the F1-terminating CU).

The embodiments of the present disclosure are further described below by using different scenarios in which a transmission path of an uplink service (including F1-C, F1-U and non-F1 services) on the IAB-node is migrated from the second donor-CU back to the first donor-CU. The following text describes by taking a handover scenario as an example, in which before an IAB-MT of an IAB-node is handed over from the second donor-CU back to the first donor-CU or after it is handed over back to the first donor-CU, the IAB-node or child node receives path migration configuration of uplink data transmitted by a network device. In the handover scenario, transmission paths of all uplink services of the IAB-node need to be migrated from the second donor-CU back to the first donor-CU.

In some embodiments, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.

In some embodiments, the path migration configuration is transmitted by the first donor-CU to the IAB-node or child node via an F1AP message or an RRC message.

In some embodiments, for an uplink service that needs to be handed over back to the first donor-CU, the path migration configuration includes: adding routing configuration used for indicating a mapping relationship between a first routing identifier and a BAP address of a next-hop node of the IAB-node, and adding a first RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier;
the first routing identifier, the BAP address of the prior-hop node of the IAB-node and the BAP address of the next-hop node of the IAB-node belong to a network topological domain of the first Donor-CU, and a destination BAP address of the first routing identifier is a BAP address of the first donor-DU.

For example, when the boundary node is handed over from the non-F1-terminating CU back to the F1-terminating CU, if a parent node after handover still uses the original donor-DU, the network device only needs to configure to the boundary node the routing information of the original routing ID belongs to the topological domain of the F1-terminating CU, and RLC channel mapping information from the boundary node to the parent node after handover (both an address of the prior-hop node and an address of the next-hop node belong to the F1-terminating CU domain).

In some embodiments, before an IAB-MT performs handover from the second donor-CU back to the first donor-CU, the IAB-node or child node receives path migration configuration.

Moreover, in order to avoid loss of uplink data caused by no available routing or egress RLC channel after handover back, the network device needs to configure routing information of the original routing ID belongs to the topological domain of the F1-terminating CU, and RLC channel mapping information from the boundary node to a parent node after the handover (both an address of the prior-hop node and an address of the next-hop node belong to the topological domain of the F1-terminating CU) before the boundary node performs the handover back. Therefore, the non-F1-terminating CU may initiate topology regression before or at the time of handover back preparation, so as to apply these parameters after completing the handover back.

For an uplink service that is migrated back to the first donor-CU, a corresponding routing identifier rewriting identifier, routing information and RLC channel mapping information need to be released. In some embodiments, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.

For example, the path migration configuration may include one or any two or all three of releasing a route identifier rewriting configuration, releasing a routing configuration or releasing a second RLC channel mapping configuration, the present disclosure is not limited to this.

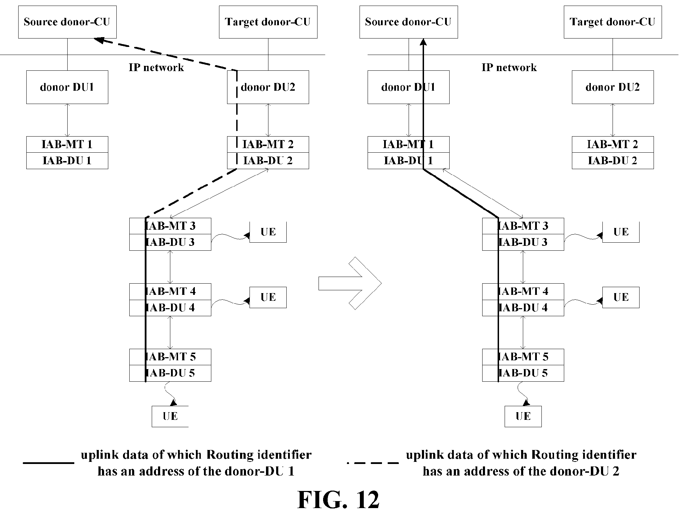

FIG. 12 is an exemplary diagram of topology regression in the embodiments of the present disclosure. As shown in FIG. 12, the IAB-node 3 (including IAB-MT 3 and IAB-DU 3) is a migrating node, a transmission path of its service is migrated from the donor-DU 1 of the source donor-CU to the donor-DU 2 of the target donor-CU. After the IAB-MT 3 of the IAB-node 3 completes the handover, the transmission path is migrated from the donor-DU 2 of the target donor-CU back to the donor-DU 1 of the source donor-CU.

As shown by the solid line on the right part in FIG. 12, routing IDs of an uplink service of the IAB-node 3 and its child node (such as the IAB-node 4 and the IAB-node 5 etc. shown in the figure) may remain unchanged, i.e., routing IDs whose destination address is donor-DU 1 are still used.

The above text describes the cases of routing IDs, and the following text describes the cases of IP addresses.

In some embodiments, in order to migrate a service back to the first donor-CU, an IAB-node or child node receives configuration information transmitted by a first donor-CU, the configuration information being used for configuring configuration information of replacing an IP address anchored to the second donor-DU with an IP address anchored to the first donor-DU; wherein the IP addresses are used for F1 user plane data, F1 control plane data or non-F1 data of the IAB-node or child node.

For example, if the first donor-DU has a source IP address filtering function, i.e., uplink data containing an IP address assigned by other donor-DU will be discarded, the migrating node needs to change an IP address carried by uplink service to an IP address assigned by the first donor-DU. Thus, the donor-CU configures the IP address assigned by the target donor-DU to the migrating node before the migrating node performs handover.

In the embodiments of the present disclosure, "IP address anchored to IAB donor-DU" may be understood as "an IP address assigned by the donor-DU" or "Transport Network Layer (TNL) address(es) that is (are) routable via the IAB-donor-DU", the terms are interchangeable, the present disclosure is not limited to this.

A routing ID of a service (including uplink and downlink services) may remain unchanged in the migrating node and its child node, but an IP address anchored to the second donor-DU needs to be replaced with an IP address anchored to the first donor-DU. The IAB-node and child node selects a used IP address according to the address of the first donor-DU, thus configuring an IP address of a service needs to direct at a BAP address of the first donor-DU, including adding an IP address anchored to the first donor-DU and releasing an IP address anchored to the second donor-DU.

In some embodiments, the configuration information is IP address configuration information for the BAP address of the first donor-DU. For example, the configuration information is used to change the IP address anchored to the second donor-DU for the BAP address of the first donor-DU to the IP address anchored to the first donor-DU.

In some embodiments, before an IAB-MT performs handover from the second donor-CU back to the first donor-CU, the IAB-node or child node receives the configuration information.

In some embodiments, the IAB-node or child node replaces an IP address anchored to the second donor-DU with an IP address anchored to the first donor-DU, when an IAB-MT completes handover from the second donor-CU back to the first donor-CU.

For example, the migrating node needs to immediately apply the IP address assigned by the first donor-DU after completing the handover. For another example, the above "replace" may further be understood as "adding the IP address anchored to the first donor-DU and releasing the IP address anchored to the second donor-DU".

In some embodiments, configuration information of the IAB-node is transmitted by a donor centralized unit via a handover command radio resource control (RRC) message or an RRC reconfiguration message. Configuration information of a child node is transmitted by a donor centralized unit via an RRC reconfiguration message.

For example, if the donor-DU under the F1-terminating CU has an IP address filtering function, in order to reduce loss of uplink data, a network device needs to configure to the boundary node the IP address assigned by the donor-DU of the F1-terminating CU for the boundary node before the boundary node performs handover, so that the boundary node immediately applies the IP address when completing the handover.

Moreover, the network device needs to configure to the child node the IP address assigned by the donor-DU under the F1-terminating CU for the child node before the boundary node performs handover, so that the child node immediately applies the assigned IP address when the boundary node completes the handover.

For another example, when handover back is completed, the boundary node may transmit an indication to the child node to make the child node apply the configuration of the IP address; or, before completion of the handover, a parent node of the child node caches the IP address configured for the child node until the boundary node completes the handover back and then transmits it to the child node.

The above text schematically describes the cases in which a transmission path of an uplink service of the migrating node is migrated back to the original donor-DU, and the following text describes the cases in which the transmission path of the uplink service of the migrating node is migrated back to other donor-DU.

In some embodiments, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU.

In some embodiments, for an uplink service that is migrated back to the first donor-CU, the path migration configuration includes: adding inter-donor-DU routing identifier rewriting configuration used for indicating a mapping relationship between a first routing identifier and a third routing identifier, adding routing configuration used for indicating a mapping relationship between the third routing identifier and a BAP address of a next-hop node of the IAB-node, and adding a first RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
the first routing identifier, the third routing identifier, the BAP address of the prior-hop node of the IAB-node and the BAP address of the next-hop node of the IAB-node belong to a network topological domain of the first donor-CU, a destination BAP address of the third routing identifier is the BAP address of the third donor-DU, and a destination BAP address of the first routing identifier is a BAP address of the first donor-DU.

In some embodiments, before an IAB-MT performs handover from the second donor-CU back to the third donor-CU, the IAB-node or child node receives the path migration configuration.

For an uplink service that is migrated back to the first donor-CU, a corresponding routing identifier rewriting identifier, routing information and RLC channel mapping information need to be released. In some embodiments, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.

For example, the path migration configuration may include one or any two or all three of releasing a route identifier rewriting configuration, releasing a routing configuration or releasing a second RLC channel mapping configuration, the present disclosure is not limited to this.

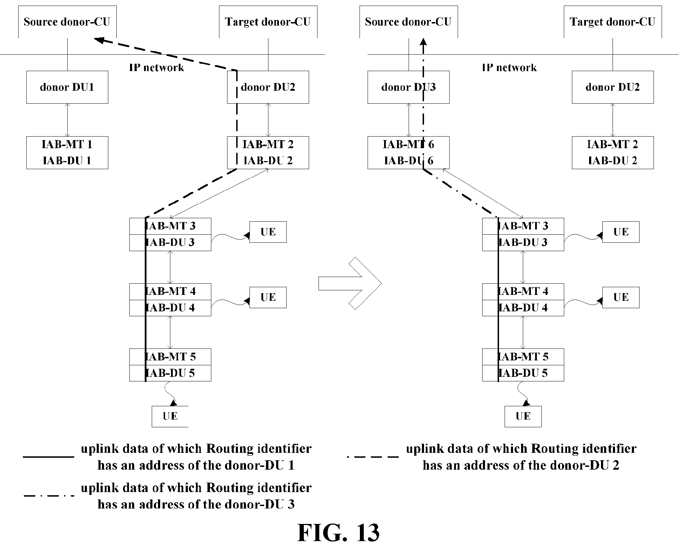

FIG. 13 is another exemplary diagram of topology regression in the embodiments of the present disclosure. As shown in FIG. 13, the IAB-node 3 (including IAB-MT 3 and IAB-DU 3) is a migrating node, a transmission path of its service is migrated from the donor-DU 2 of the target donor-CU back to the donor-DU 3 of the source donor-CU, after being migrated from the donor-DU 1 of the source donor-CU to the donor-DU 2 of the target donor-CU.

After the IAB-MT 3 of the IAB-node 3 completes handover back, routing IDs of an uplink service of the IAB-node 3 and its child node (such as the IAB-node 4 and the IAB-node 5 etc. shown in the figure) may remain unchanged, as shown by the solid line on the right part.

In some embodiments, since the IAB-node has received mapping relationship information (inter-donor-DU rewriting information) transmitted by a network device, the IAB-node may rewrite a first routing ID carried in a BAP header of uplink data to a third routing ID.

For example, as shown by the dotted line on the right part in FIG. 13, the IAB-node 3 needs to replace the original routing ID of its uplink service and the original routing ID of uplink service of a child node (such as the IAB-node 4 and the IAB-node 5 shown in the figure) with target routing IDs. The destination BAP address of the original routing ID is the donor-DU 1 of the source donor-CU, and after replacement, the destination BAP address of the routing ID is the donor-DU 3 of the source donor-CU.

For another example, after the source routing ID is replaced with the target routing ID, routing selection and backhaul RLC channel selection may be performed according to the target routing ID, the donor-CU updates routing information in the migrating node (because the original routing information does not contain routing available for the target routing ID) and RLC channel mapping information.

The migrating node may apply the inter-donor-DU rewriting information, the new routing information and the RLC channel mapping information when completing the handover or receiving the configuration. The donor-CU may indicate the migrating node to cache the path migration configuration first, and apply the path migration configuration when the IAB-MT completes the handover.

The above text describes the cases of routing IDs, and the following text describes the cases of IP addresses.

In some embodiments, in order to migrate a service back to the first donor-CU, an IAB-node or child node receives configuration information used for configuring configuration information of replacing an IP address anchored to the second donor-DU with an IP address anchored to the third donor-DU; wherein the IP addresses are used for F1 user plane data, F1 control plane data or non-F1 data of the IAB-node or child node.

For example, if the donor-DU 3 has an IP address filtering function, i.e., uplink data containing an IP address assigned by other donor-DU will be discarded, the migrating node needs to change an IP address carried by uplink F1-U data to an IP address assigned by the donor-DU 3. Thus, the donor-CU configures the IP address assigned by the donor-DU 3 of F1-U to the migrating node before the migrating node performs handover.

In the embodiments of the present disclosure, "IP address anchored to IAB donor-DU" may be understood as "an IP address assigned by the donor-DU" or "Transport Network Layer (TNL) address(es) that is (are) routable via the IAB-donor-DU", the terms are interchangeable, the present disclosure is not limited to this.

In some embodiments, before an IAB-MT performs handover from the second donor-CU back to the first donor-CU, the IAB-node or child node receives the configuration information.

A routing ID of a service (including uplink and downlink services) may remain unchanged in the migrating node and its child node, but an IP address anchored to the second Donor-DU needs to be replaced with an IP address anchored to the third Donor-DU. The IAB-node and child node selects a used IP address according to the address of the first Donor-DU, thus configuring an IP address of a service needs to direct at a BAP address of the first Donor-DU, including adding an IP address anchored to the third donor-DU and releasing an IP address anchored to the second donor-DU.

In some embodiments, the configuration information is IP address configuration information for the BAP address of the first donor-DU. For example, the configuration information is used to change the IP address anchored to the second donor-DU for the BAP address of the first donor-DU to the IP address anchored to the third donor-DU.

In some embodiments, the IAB-node or child node replaces an IP address anchored to the second donor-DU with an IP address anchored to the third donor-DU, when an IAB-MT completes handover from the second donor-CU back to the first donor-CU.

For example, the migrating node needs to immediately apply the IP address assigned by the donor-DU 3 after completing the handover. For another example, the above "replace" may further be understood as "adding the IP address anchored to the third donor-DU and releasing the IP address anchored to the second donor-DU".

In some embodiments, configuration information of the IAB-node is transmitted by a donor centralized unit via a handover command radio resource control (RRC) message or an RRC reconfiguration message. Configuration information of a child node is transmitted by a donor centralized unit via an RRC reconfiguration message.

The above text makes a schematic description by taking a handover scenario as an example, and the following text describes a reestablishment scenario and a dual connection scenario. Same contents as the above handover scenario are not repeated here.

In some embodiments, after an IAB-MT of the IAB-node is reestablished to the second donor-CU, the IAB-node or child node receives a path migration configuration of uplink data transmitted by a network device; and the IAB-node or child node applies the path migration configuration, wherein an IAB-DU of the IAB-node maintains F1 connection with the first donor-CU. In a reestablishment scenario, transmission paths of all services of the IAB-node need to be migrated from the second donor-CU back to the first donor-CU.

In some embodiments, the IAB-node or child node receives a path migration configuration of uplink data transmitted by a network device; and the IAB-node or child node applies the path migration configuration, wherein an IAB-MT of the IAB-node establishes dual connection with the first donor-CU and the second donor-CU, and an IAB-DU of the IAB-node maintains F1 connection with the first donor-CU. In a dual connection scenario, a transmission path of partial services of the IAB-node may only be migrated from the second donor-CU back to the first donor-CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, an IAB-node or a child node receives a path migration configuration of uplink data transmitted by a network device; and the IAB-node or the child node applies the path migration configuration, wherein an IAB-DU of the IAB-node maintains F1 connection with the first donor-CU. Thereby, the problem that uplink data is discarded can be reduced or avoided, a transmission delay and service interruption time is reduced.

### Embodiments of a second aspect

The embodiments of the present disclosure provide a topology regression method, which is described from a donor centralized unit side. The contents same as the embodiments of the first aspect are not repeated.

In some embodiments, a transmission path of an uplink service of an IAB-node is migrated from a second donor centralized unit back to a first donor centralized unit (donor-CU), after being migrated from the first donor centralized unit to the second donor centralized unit. The first donor-CU receives a topology regression request transmitted by the second donor-CU, and the first donor-CU transmits a path migration configuration of uplink data; wherein the IAB-DU of the IAB-node maintains F1 connection with the first donor-CU.

In some embodiments, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.

In some embodiments, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU.

In some embodiments, the first donor-CU transmits the path migration configuration to the IAB-node or the child node via an F1AP message or an RRC message.

In some embodiments, the topology regression request contains an IP address anchored to the second donor-DU for a BAP address of the first donor-DU, wherein the IP address is used for F1 user plane data, F1 control plane data or non-F1 data of the IAB-node or a child node.

In some embodiments, the first donor-CU transmits to the second donor-CU configuration information used for configuring replacing an IP address anchored to the second donor-DU with an IP address anchored to the first donor-DU, or configuration information used for configuring replacing an IP address anchored to the second donor-DU with an IP address anchored to the third donor-DU.

The following text makes a description first by taking a handover scenario as an example. In some embodiments, before or after an IAB-MT of the IAB-node is handed over from the second donor-CU back to the first donor-CU, the first donor-CU transmits a path migration configuration of uplink data.

In some embodiments, after transmitting a handover request of being handed over back to the first donor-CU for the IAB-MT, the second donor-CU transmits a topology regression request to the first donor-CU.

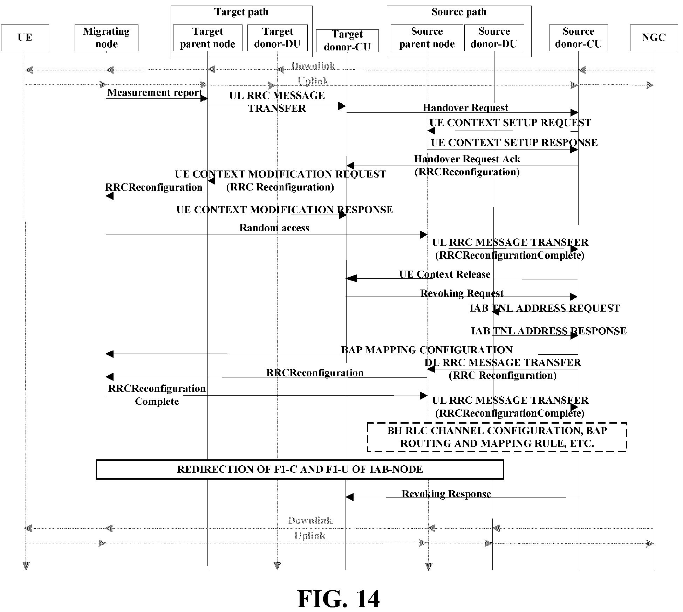

FIG. 14 is a signaling flow graph of topology regression in the embodiments of the present disclosure, exemplarily shows a situation in which when an IAB-node (boundary node) is handed over from the non-F1-terminating CU back to the F1-terminating CU, the IAB-node (boundary node) performs topology regression after handover preparation.
- The boundary node transmits a measurement report to the target donor-CU, and triggers the non-F1-terminating CU (target donor-CU) to initiate handover preparation of being handed over back to the F1-terminating CU (source donor-CU).
- After the boundary node completes the handover, the target donor-CU transmits a UE context release request to the source donor-CU for a boundary node-MT.
- The target donor-CU transmits a topology regression request Xn message (for a UA (a UE-associated message) of the boundary node and uses an XnAP identifier of the boundary node). It includes: for a migrating node, requesting to assign an IP address for F1 or non-F1 service; for a child node, requesting to assign IP addresses for F1 and non-F1 services.
- If the boundary node is handed over back to the original donor-DU, the boundary node is configured with routing information in the topological domain of the F1-terminated CU for the original routing ID, new RLC channel mapping information belonging to the topological domain of the F1-terminating CU is configured, the original donor-DU is requested to assign IP addresses for F1 and non-F1 services of the boundary node, and the original donor-DU is requested to assign IP addresses for F1 and non-F1 services of the child node.

If the boundary node is not handed over back to the original donor-DU, the boundary node is configured with inter-donor-DU rewriting information of the F1-terminating CU domain, the boundary node is configured with routing information in the topological domain of the F1-terminating CU for the replaced target routing ID, new RLC channel mapping information belonging to the topological domain of the F1-terminating CU is configured, the new donor-DU is requested to assign IP addresses for F1 and non-F1 services of the boundary node, and the new donor-DU is requested to assign IP addresses for F1 and non-F1 services of the child node.
- The source donor-CU uses an F1AP message to transmit the inter-donor-DU rewriting information, the routing information, and the RLC channel mapping information to the boundary node, and releases the following configurations: BAP Header Rewriting Information, routing information of the Non-F1-terminating CU domain, RLC channel mapping information in which an address of a prior-hop node belongs to the topological domain of the F1-terminating CU and an address of a next-hop node belongs to the topological domain of the non-F1-terminating CU.
- The source donor-CU transmits an RRC reconfiguration message (containing an IP address assigned by the new or original donor-DU under the F1-terminating-CU, used for F1 and non-F1 services) to the boundary node.
- The source donor-CU transmits an RRC reconfiguration message (containing an IP address assigned by the new or original donor-DU under the F1-terminating-CU, used for F1 and non-F1 services) to the child node.
- (Optionally) The source donor-CU updates routing information and RLC channel mapping information for one or more nodes on an original path.
- The boundary node applies a configured IP address.
- The child node applies a configured IP address.
- The source donor-CU transmits a topology regression response Xn message to the target donor-CU (for a UA (a UE-associated message) of the boundary node and uses an XnAP identifier of the boundary node).
- The target donor-CU/source donor-CU releases the XnAP identifier for the boundary node.

The above signaling process only schematically describes the embodiments of the present disclosure, but the present disclosure is not limited to this. For more specific contents about signaling, relevant technologies may be further referred to.

In some embodiments, the second donor-CU contains a topology regression request in a handover request of being handed over back to the first donor-CU for an IAB-MT.

In some embodiments, the configuration information is contained in an RRC reconfiguration message contained in a handover request response message of being handed over back to the first donor-CU for the IAB-MT.

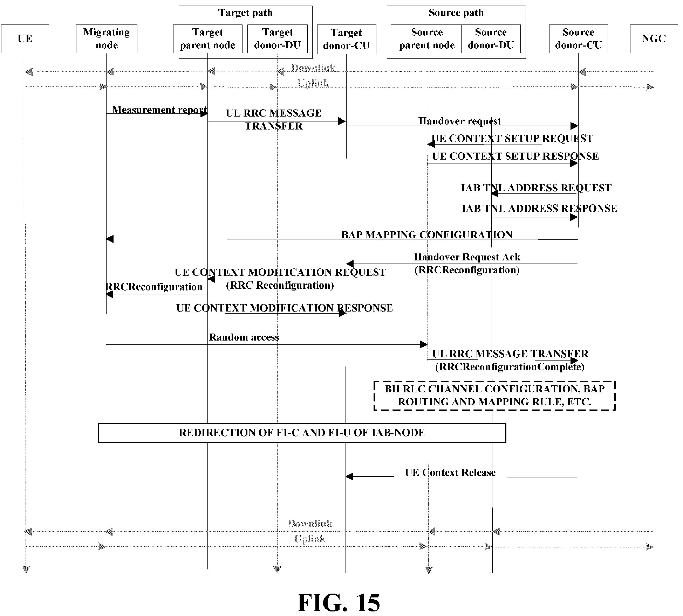

FIG. 15 is another signaling flow graph of topology regression in the embodiments of the present disclosure, exemplarily shows a situation in which when an IAB-node (boundary node) is handed over from the non-F1-terminating CU back to the F1-terminating CU, the IAB-node (boundary node) performs topology regression at the same time of handover preparation. That is, the handover request message contains a topology regression request, which may reduce loss of uplink data and service interruption, compared to FIG. 14.
- The boundary node transmits a measurement report to the target donor-CU, and triggers the non-F1-terminating CU (target donor-CU) to initiate handover preparation of being handed over back to the F1-terminating CU (source donor-CU).

The handover request message contains a topology regression request, and may include the following information: for a migrating node, requesting to assign an IP address for F1 or non-F1 service; for a child node, requesting to assign IP addresses for F1 and non-F1 services.
- If the boundary node is handed over back to the original donor-DU, the boundary node is configured with routing information in the topological domain of the F1-terminated CU for the original routing ID, new RLC channel mapping information belonging to the topological domain of the F1-terminating CU is configured, the original donor-DU is requested to assign IP addresses for F1 and non-F1 services of the boundary node, and the original donor-DU is requested to assign IP addresses for F1 and non-F1 services of the child node.

If the boundary node is not handed over back to the original donor-DU, the boundary node is configured with inter-donor-DU rewriting information of the F1-terminating CU domain, the boundary node is configured with routing information in the topological domain of the F1-terminated CU for the replaced routing ID, new RLC channel mapping information belonging to the topological domain of the F1-terminating CU is configured, the new donor-DU is requested to assign IP addresses for F1 and non-F1 services of the boundary node, and the new donor-DU is requested to assign IP addresses for F1 and non-F1 services of the child node.
- The source donor-CU uses an F1AP message to transmit the inter-donor-DU rewriting information, the routing information, and the RLC channel mapping information to the boundary node, and releases the following configurations: BAP Header Rewriting Information, a routing table of the Non-F1-terminating CU domain, RLC channel mapping information in which an address of a prior-hop node belongs to the topological domain of the F1-terminating CU and an address of a next-hop node belongs to the topological domain of the non-F1-terminating CU.
- The source donor-CU transmits an RRC reconfiguration message (containing an IP address assigned by the new or original donor-DU under the F1-terminating-CU, used for F1 and non-F1 services) to the child node.
- The source donor-CU transmits a handover request response Xn message to the target donor-CU, containing a handover command RRC message for the boundary node.
- The target donor-CU transmits a handover command RRC reconfiguration message (containing an IP address assigned by the new or original donor-DU under the F1-terminating-CU, used for F1 and non-F1 services) to the boundary node.
- The boundary node performs a random access procedure of handover.
- (Optionally) The source donor-CU updates a routing table and an RLC channel mapping table for one or more nodes on an original path.
- The boundary node applies a configured IP address when completing the handover.
- The child node applies a configured IP address when the boundary node completes the handover.
- After the boundary node completes the handover, the source donor-CU transmits a UE context release request to the target donor-CU for a boundary node-MT.
- The source donor-CU/target donor-CU releases the XnAP identifier for the boundary node.

The above signaling process only schematically describes the embodiments of the present disclosure, but the present disclosure is not limited to this. For more specific contents about signaling, relevant technologies may be further referred to.

In some embodiments, before transmitting a handover request of being handed over back to the first donor-CU for the IAB-MT, the second donor-CU transmits a topology regression request to the first donor-CU.

If topology regression is performed before handover preparation, a signaling flow is similar to that in FIG. 15. The difference, for example, includes that the topology regression request is a separate Xn message. In addition, because it is a separate Xn message, the topology regression request may indicate the source donor-CU to carry an assigned IP address in the handover command RRC message included in the handover preparation response, rather than in the topology regression response message, thereby the boundary node may immediately apply the configured IP address when completing the handover.

The above text schematically describes handover scenarios, but the present disclosure is not limited to this. The following text describes a reestablishment scenario and a dual connection scenario, the same contents are not repeated.

In some embodiments, after an IAB-MT of the IAB-node is reestablished to the second donor-CU, the first donor-CU transmits a path migration configuration of uplink data. In such scenario, the first donor-CU may trigger the second donor-CU to initiate a topology regression request. For example, when the IAB-MT is reestablished to the first donor-CU, and the first donor-CU requests the second donor-CU to obtain context information of the IAB-MT, triggers the second donor-CU to initiate the topology regression request.

In some embodiments, an IAB-MT of the IAB-node establishes a dual connection with the first donor-CU and the second donor-CU. In such scenario, for example, the topology regression request contains identification information of a service whose transmission path is migrated from the second donor-CU back to the first donor-CU.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

As can be known from the above embodiments, when a transmission path of an uplink service of an IAB-node or child node is migrated from the second donor-CU back to the first donor-CU, the IAB-node or child node receives a path migration configuration of uplink data transmitted by a network device; and the IAB-node or the child node applies the path migration configuration, wherein an IAB-DU of the IAB-node maintains F1 connection with the first donor-CU. Thereby, the problem that uplink data is discarded can be reduced or avoided, a transmission delay and service interruption time is reduced.

### Embodiments of a third aspect

The embodiments of the present disclosure provide an IAB-node device, the contents same as the embodiments of the first and second aspects are not repeated. The device e.g. may be an IAB-node or child node in an IAB system, or may be a component or component(s) or assemblies or modules configured in the IAB-node or child node. A transmission path of an uplink service of the IAB-node device is migrated from a second donor centralized unit back to a first donor centralized unit, after being migrated from the first donor centralized unit to the second donor centralized unit.

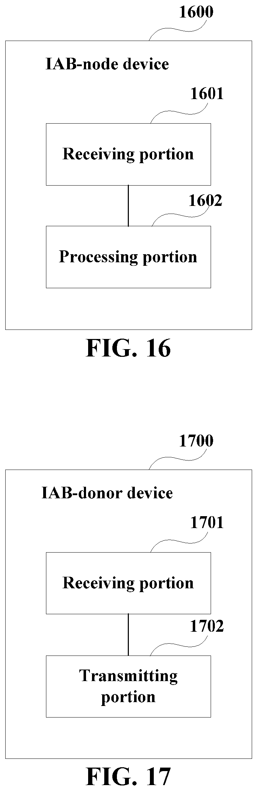

FIG. 16 is a schematic diagram of an IAB-node device in the embodiments of the present disclosure. As shown in FIG. 16, the IAB-node device 1600 includes: a receiving portion 1601 and a processing portion 1602. The receiving portion 1601 receives a path migration configuration of uplink data transmitted by a network device; and the processing portion 1602 applies the path migration configuration, wherein an IAB-DU of the IAB-node maintains F1 connection with the first Donor-CU.

In some embodiments, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.

In some embodiments, the path migration configuration is transmitted by the first donor-CU to the IAB-node or child node via an F1AP message or an RRC message.

In some embodiments, the path migration configuration includes: adding routing configuration used for indicating a mapping relationship between a first routing identifier and a BAP address of a next-hop node of the IAB-node, and adding a first RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier;
the first routing identifier, the BAP address of the prior-hop node of the IAB-node and the BAP address of the next-hop node of the IAB-node belong to a network topological domain of the first Donor-CU, and a destination BAP address of the first routing identifier is a BAP address of the first donor-DU.

In some embodiments, before an IAB-MT performs handover from the second donor-CU back to the first donor-CU, the receiving portion 1601 receives path migration configuration.

In some embodiments, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.

In some embodiments, the receiving portion 1601 further receives configuration information used for configuring replacing an IP address anchored to the second donor-DU with an IP address anchored to the first donor-DU; wherein the IP addresses are used for F1 user plane data, F1 control plane data or non-F1 data of the IAB-node or the child node.

In some embodiments, before the IAB-MT performs handover from the second donor-CU back to the first donor-CU, the receiving portion 1601 receives the configuration information;
the processing portion 1602 replaces an IP address anchored to the second donor-DU with an IP address anchored to the first donor-DU, when the IAB-MT completes handover from the second donor-CU back to the first donor-CU.

In some embodiments, the configuration information of the IAB-node is transmitted via a handover command radio resource control (RRC) message or an RRC reconfiguration message; the configuration information of the child node is transmitted via an RRC reconfiguration message.

In some embodiments, the configuration information is IP address configuration information for the BAP address of the first donor-DU. For example, the configuration information changes the IP address anchored to the second donor-DU for the BAP address of the first donor-DU to the IP address anchored to the first donor-DU.

In some embodiments, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU;
the path migration configuration is transmitted by the first donor-CU to the IAB-node or child node via an F1AP message.

In some embodiments, the path migration configuration includes: adding inter-donor-DU routing identifier rewriting configuration used for indicating a mapping relationship between a first routing identifier and a third routing identifier, adding routing configuration used for indicating a mapping relationship between the third routing identifier and a BAP address of a next-hop node of the IAB-node, and adding a first RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
the first routing identifier, the third routing identifier, the BAP address of the prior-hop node of the IAB-node and the BAP address of the next-hop node of the IAB-node belong to a network topological domain of the first donor-CU, a destination BAP address of the third routing identifier is the BAP address of the third donor-DU, and a destination BAP address of the first routing identifier is a BAP address of the first donor-DU.

In some embodiments, before an IAB-MT performs handover from the second donor-CU back to the third donor-CU, the receiving portion 1601 receives path migration configuration.

In some embodiments, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.

In some embodiments, the receiving portion 1601 further receives configuration information used for configuring replacing an IP address anchored to the second donor-DU with an IP address anchored to the third donor-DU; wherein the IP addresses are used for F1 user plane data, F1 control plane data or non-F1 data of the IAB-node or the child node.

In some embodiments, before the IAB-MT performs handover from the second donor-CU back to the first donor-CU, the receiving portion 1601 receives the configuration information;
the processing portion 1602 replaces an IP address anchored to the second donor-DU with an IP address anchored to the third donor-DU, when the IAB-MT completes handover from the second donor-CU back to the first donor-CU.

In some embodiments, the configuration information of the IAB-node is transmitted via a handover command radio resource control (RRC) message or an RRC reconfiguration message; the configuration information of the child node is transmitted via an RRC reconfiguration message.

In some embodiments, the configuration information is IP address configuration information for the BAP address of the first donor-DU. For example, the configuration information changes the IP address anchored to the second donor-DU for the BAP address of the first donor-DU to the IP address anchored to the third donor-DU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-node device 1600 in the embodiments of the present disclosure may further include other components or modules. For detailed contents of these components or modules, relevant technologies can be referred to.

Moreover, for the sake of simplicity, FIG. 16 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, an IAB-node or a child node receives a path migration configuration of uplink data transmitted by a network device; and the IAB-node or the child node applies the path migration configuration, wherein an IAB-DU of the IAB-node maintains F1 connection with the first donor-CU. Thereby, the problem that uplink data is discarded can be reduced or avoided, a transmission delay and service interruption time is reduced.

### Embodiments of a fourth aspect

The embodiments of the present disclosure provide an IAB-donor device, the contents same as the embodiments of the first to third aspects are not repeated. The device e.g. may be an IAB donor-CU in an IAB system, or may be a component or component(s) or assemblies or modules configured in the IAB donor-CU.

The IAB system includes an IAB-donor device and an IAB-node. A transmission path of an uplink service of the IAB-node is migrated from a second donor centralized unit back to a first donor centralized unit, after being migrated from the first donor centralized unit to the second donor centralized unit.

FIG. 17 is a schematic diagram of an IAB-donor device in the embodiments of the present disclosure. As shown in FIG. 17, the IAB-donor device 1700 includes: a receiving portion 1701 and a transmitting portion 1702. The receiving portion 1701 receives a topology regression request transmitted by the second donor-CU, and the transmitting portion 1702 transmits a path migration configuration of uplink data; wherein the IAB-DU of the IAB-node maintains F1 connection with the first donor-CU.

In some embodiments, the transmitting portion 1702 transmits the path migration configuration to the IAB-node or child node via an F1AP message or an RRC message.

In some embodiments, the topology regression request contains an IP address anchored to the second donor-DU for a BAP address of the first donor-DU, wherein the IP address is used for F1 user plane data, F1 control plane data or non-F1 data of the IAB-node or a child node.

In some embodiments, before transmitting a handover request of being handed over back to the first donor-CU for the IAB-MT, the second donor-CU transmits a topology regression request to the first donor-CU; or, the second donor-CU contains the topology regression request in the handover request of being handed over back to the first donor-CU for the IAB-MT; or after transmitting the handover request of being handed over back to the first donor-CU for the IAB-MT, the second donor-CU transmits the topology regression request to the first donor-CU.

In some embodiments, the transmitting portion 1702 transmits to the second donor-CU configuration information used for configuring replacing an IP address anchored to the second donor-DU with an IP address anchored to the first donor-DU, or configuration information used for configuring replacing an IP address anchored to the second donor-DU with an IP address anchored to the third donor-DU.

In some embodiments, the configuration information is contained in an RRC reconfiguration message contained in a handover request response message of being handed over back to the first donor-CU for the IAB-MT.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1700 in the embodiments of the present disclosure may further include other components or modules. For detailed contents of these components or modules, relevant technologies can be referred to.

Moreover, for the sake of simplicity, FIG. 17 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, when a transmission path of an uplink service of an IAB-node is migrated from the second donor-CU back to the first donor-CU, the IAB-node or child node receives a path migration configuration of uplink data transmitted by a network device; and the IAB-node or the child node applies the path migration configuration, wherein an IAB-DU of the IAB-node maintains F1 connection with the first donor-CU. Thereby, the problem that uplink data is discarded can be reduced or avoided, a transmission delay and service interruption time is reduced.

### Embodiments of a fifth aspect

The embodiments of the present disclosure provide a communication system, including a donor device and an IAB-node; for a network architecture of the donor device and the IAB-node, relevant technologies may be further referred to, description will be omitted here.

The embodiments of the present disclosure further provide an IAB device, which may be an IAB-donor device, or may be an IAB-node device (IAB-node or child node).

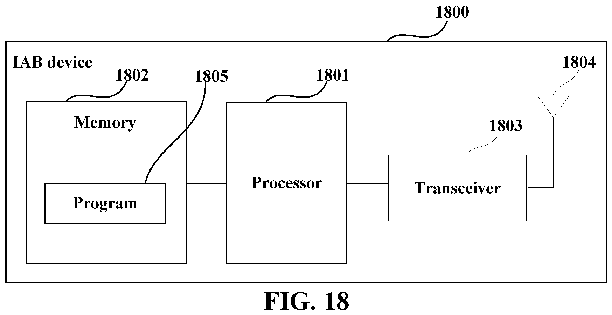

FIG. 18 is a schematic diagram of an IAB device in the embodiments of the present disclosure. As shown in FIG. 18, the IAB device 1800 may include: a processor (such as a central processing unit (CPU)) 1801 and a memory 1802; the memory 1802 is coupled to the processor 1801. The memory 1802 may store various data; moreover, also stores a program 1805 for information processing, and executes the program 1805 under the control of the central processor 1801.

For example, the processor 1801 may be configured to execute a program to implement a topology regression method in the embodiments of the first aspect. For example, the processor 1801 may be configured to perform the following control: receiving a path migration configuration of uplink data transmitted by a network device; and applying the path migration configuration, wherein an IAB-DU of the IAB-node maintains F1 connection with the first donor-CU.

For example, the processor 1801 may be configured to execute a program to implement a topology regression method in the embodiments of the second aspect. For example, the processor 1801 may be configured to perform the following control: receiving a topology regression request transmitted by the second donor-CU, and transmitting a path migration configuration of uplink data; wherein the IAB-DU of the IAB-node maintains F1 connection with the first donor-CU.

In addition, as shown in FIG. 18, the IAB device 1800 may further include: a transceiver 1803 and an antenna 1804, etc.; wherein the functions of the components are similar to relevant arts, which are not repeated here. It's worth noting that the IAB device 1800 does not have to include all the components shown in FIG. 18. Moreover, the IAB device 1800 may also include components not shown in FIG. 18, relevant arts may be referred to.

The embodiments of the present disclosure further provide a computer readable program, wherein when an IAB-node device executes the program, the program enables a computer to execute a topology regression method in the embodiments of the first aspect, in the IAB-node device.

The embodiments of the present disclosure further provide a storage medium in which a computer readable program is stored, wherein the computer readable program enables a computer to execute a topology regression method in the embodiments of the first aspect, in the IAB-node device.

The embodiments of the present disclosure further provide a computer readable program, wherein when an IAB-donor device executes the program, the program enables a computer to execute a topology regression method in the embodiments of the second aspect, in the IAB-donor device.

The embodiments of the present disclosure further provide a storage medium in which a computer readable program is stored, wherein the computer readable program enables a computer to execute a topology regression method in the embodiments of the second aspect, in the IAB-donor device.

The device and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/device described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium can be coupled to a processor, thereby enabling the processor to read information from the storage medium, and to write the information into the storage medium; or the storage medium can be a constituent part of the processor. The processor and the storage medium can be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

Regarding the above implementations disclosed in this embodiment, the following supplements are further disclosed:
1. A topology regression method, a transmission path of an uplink service of an IAB-node is migrated from a second donor centralized unit back to a first donor centralized unit, after being migrated from the first donor centralized unit (donor-CU) to the second donor centralized unit, and the method includes:
   an IAB-node or child node receives a path migration configuration of uplink data transmitted by a network device; and
   the IAB-node or child node applies the path migration configuration;
   wherein an IAB-DU of the IAB-node maintains F1 connection with the first donor-CU.
2. The method according to Supplement 1, wherein, before an IAB-MT of an IAB-node is handed over from the second donor-CU back to the first donor-CU or after it is handed over back to the first donor-CU, the IAB-node or child node receives path migration configuration of uplink data transmitted by the network device.
3. The method according to Supplement 2, wherein, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.
4. The method according to Supplement 3, wherein, the path migration configuration is transmitted by the first donor-CU to the IAB-node or child node via an F1AP message or an RRC message.
5. The method according to Supplement 3 or 4, wherein, the path migration configuration includes: adding routing configuration used for indicating a mapping relationship between a first routing identifier and a BAP address of a next-hop node of the IAB-node, and adding a first RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier;
   the first routing identifier, the BAP address of the prior-hop node of the IAB-node and the BAP address of the next-hop node of the IAB-node belong to a network topological domain of the first Donor-CU, and a destination BAP address of the first routing identifier is a BAP address of the first donor-DU.
6. The method according to Supplement 5, wherein, before the IAB-MT performs handover from the second donor-CU back to the first donor-CU, the IAB-node or child node receives the path migration configuration.
7. The method according to Supplement 5, wherein, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
   wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.
8. The method according to any one of Supplements 5 to 7, wherein the method further includes:
   the IAB-node or child node receives configuration information used for configuring replacing an IP address anchored to the second donor-DU with an IP address anchored to the first donor-DU; wherein the IP addresses are used for F1 user plane data, F1 control plane data or non-F1 data of the IAB-node or the child node.
9. The method according to Supplement 8, wherein, before the IAB-MT performs handover from the second donor-CU back to the first donor-CU, the IAB-node or child node receives the configuration information.
10. The method according to Supplement 8, wherein the method further includes:
   the IAB-node or child node replaces an IP address anchored to the second donor-DU with an IP address anchored to the first donor-DU.
11. The method according to any one of Supplements 8 to 11, wherein, the configuration information of the IAB-node is transmitted via a handover command radio resource control (RRC) message or an RRC reconfiguration message; the configuration information of the child node is transmitted via an RRC reconfiguration message.
12. The method according to any one of Supplements 8 to 11, wherein, the configuration information is IP address configuration information for the BAP address of the first donor-DU.
13. The method according to Supplement 12, wherein the configuration information is used to change the IP address anchored to the second donor-DU for the BAP address of the first donor-DU to the IP address anchored to the first donor-DU.
14. The method according to Supplement 2, wherein, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU.
15. The method according to Supplement 14, wherein, the path migration configuration is transmitted by the first donor-CU to the IAB-node or child node via an F1AP message or an RRC message.
16. The method according to Supplement 14 or 15, wherein, the path migration configuration includes: adding inter-donor-DU routing identifier rewriting configuration used for indicating a mapping relationship between a first routing identifier and a third routing identifier, adding routing configuration used for indicating a mapping relationship between the third routing identifier and a BAP address of a next-hop node of the IAB-node, and adding a first RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
   the first routing identifier, the third routing identifier, the BAP address of the prior-hop node of the IAB-node and the BAP address of the next-hop node of the IAB-node belong to a network topological domain of the first donor-CU, a destination BAP address of the third routing identifier is the BAP address of the third donor-DU, and a destination BAP address of the first routing identifier is a BAP address of the first donor-DU.
17. The method according to any one of Supplements 14 to 16, wherein, before the IAB-MT performs handover from the second donor-CU back to the third donor-CU, the IAB-node or child node receives the path migration configuration.
18. The method according to Supplement 16, wherein, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
   wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.
19. The method according to any one of Supplements 16 to 19, wherein the method further includes:
   the IAB-node or child node receives configuration information used for configuring replacing an IP address anchored to the second donor-DU with an IP address anchored to the third donor-DU; wherein the IP addresses are used for F1 user plane data, F1 control plane data or non-F1 data of the IAB-node or the child node.
20. The method according to Supplement 19, wherein, before the IAB-MT performs handover from the second donor-CU back to the first donor-CU, the IAB-node or child node receives the configuration information.
21. The method according to Supplement 19, wherein, the method further includes:
   the IAB-node or child node replaces an IP address anchored to the second donor-DU with an IP address anchored to the third donor-DU.
22. The method according to any one of Supplements 19 to 21, wherein, the configuration information of the IAB-node is transmitted via a handover command radio resource control (RRC) message or an RRC reconfiguration message; the configuration information of the child node is transmitted via an RRC reconfiguration message.
23. The method according to any one of Supplements 19 to 22, wherein, the configuration information is IP address configuration information for the BAP address of the first donor-DU.
24. The method according to Supplement 23, wherein the configuration information is used to change the IP address anchored to the second donor-DU for the BAP address of the first donor-DU to the IP address anchored to the third donor-DU.
25. The method according to Supplement 1, wherein, after an IAB-MT of the IAB-node is reestablished to the second donor-CU, the IAB-node or child node receives path migration configuration of uplink data transmitted by the network device.
26. The method according to Supplement 25, wherein, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.
27. The method according to Supplement 26, wherein, the path migration configuration is transmitted by the first donor-CU to the IAB-node or child node via an F1AP message or an RRC message.
28. The method according to Supplement 26 or 27, wherein, the path migration configuration includes: adding routing configuration used for indicating a mapping relationship between a first routing identifier and a BAP address of a next-hop node of the IAB-node, and adding a first RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier;
   the first routing identifier, the BAP address of the prior-hop node of the IAB-node and the BAP address of the next-hop node of the IAB-node belong to a network topological domain of the first Donor-CU, and a destination BAP address of the first routing identifier is a BAP address of the first donor-DU.
29. The method according to Supplement 28, wherein, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
   wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.
30. The method according to Supplement 28 or 29, wherein the method further includes:
   the IAB-node or child node receives configuration information used for configuring replacing an IP address anchored to the second donor-DU with an IP address anchored to the first donor-DU; wherein the IP addresses are used for F1 user plane data, F1 control plane data or non-F1 data of the IAB-node or the child node.
31. The method according to Supplement 30, wherein, the configuration information is IP address configuration information for the BAP address of the first donor-DU.
32. The method according to Supplement 31, wherein, the configuration information is used to change the IP address anchored to the second donor-DU for the BAP address of the first donor-DU to the IP address anchored to the first donor-DU.
33. The method according to Supplement 25, wherein, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU.
34. The method according to Supplement 33, wherein, the path migration configuration is transmitted by the first donor-CU to the IAB-node or child node via an F1AP message or an RRC message.
35. The method according to Supplement 33 or 34, wherein, the path migration configuration includes: adding inter-donor-DU routing identifier rewriting configuration used for indicating a mapping relationship between a first routing identifier and a third routing identifier, adding routing configuration used for indicating a mapping relationship between the third routing identifier and a BAP address of a next-hop node of the IAB-node, and adding a first RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
   the first routing identifier, the third routing identifier, the BAP address of the prior-hop node of the IAB-node and the BAP address of the next-hop node of the IAB-node belong to a network topological domain of the first donor-CU, a destination BAP address of the third routing identifier is the BAP address of the third donor-DU, and a destination BAP address of the first routing identifier is a BAP address of the first donor-DU.
36. The method according to Supplement 35, wherein, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
   wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.
37. The method according to Supplement 35 or 36, wherein, the method further includes:
   the IAB-node or child node receives configuration information used for configuring replacing an IP address anchored to the second donor-DU with an IP address anchored to the third donor-DU; wherein the IP addresses are used for F1 user plane data, F1 control plane data or non-F1 data of the IAB-node or the child node.
38. The method according to Supplement 37, wherein, the configuration information is IP address configuration information for the BAP address of the first donor-DU.
39. The method according to Supplement 38, wherein, the configuration information is used to change the IP address anchored to the second donor-DU for the BAP address of the first donor-DU to the IP address anchored to the third donor-DU.
40. The method according to Supplement 1, wherein, an IAB-MT of the IAB-node establishes a dual connection with the first donor-CU and the second donor-CU.
41. The method according to Supplement 40, wherein, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.
42. The method according to Supplement 41, wherein, the path migration configuration is transmitted by the first donor-CU to the IAB-node or child node via an F1AP message or an RRC message.
43. The method according to Supplement 41 or 42, wherein, the path migration configuration includes: adding routing configuration used for indicating a mapping relationship between a first routing identifier and a BAP address of a next-hop node of the IAB-node, and adding a first RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier;
   the first routing identifier, the BAP address of the prior-hop node of the IAB-node and the BAP address of the next-hop node of the IAB-node belong to a network topological domain of the first Donor-CU, and a destination BAP address of the first routing identifier is a BAP address of the first donor-DU.
44. The method according to Supplement 43, wherein, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
   wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.
45. The method according to Supplement 43 or 44, wherein, the method further includes:
   the IAB-node or child node receives configuration information used for configuring replacing an IP address anchored to the second donor-DU with an IP address anchored to the first donor-DU; wherein the IP addresses are used for F1 user plane data, F1 control plane data or non-F1 data of the IAB-node or the child node.
46. The method according to Supplement 45, wherein, the configuration information is IP address configuration information for the BAP address of the first donor-DU.
47. The method according to Supplement 46, wherein, the configuration information is used to change the IP address anchored to the second donor-DU for the BAP address of the first donor-DU to the IP address anchored to the first donor-DU.
48. The method according to Supplement 40, wherein, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU.
49. The method according to Supplement 48, wherein, the path migration configuration is transmitted by the first donor-CU to the IAB-node or child node via an F1AP message or an RRC message.
50. The method according to Supplement 48 or 49, wherein, the path migration configuration includes: adding inter-donor-DU routing identifier rewriting configuration used for indicating a mapping relationship between a first routing identifier and a third routing identifier, adding routing configuration used for indicating a mapping relationship between the third routing identifier and a BAP address of a next-hop node of the IAB-node, and adding a first RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
   the first routing identifier, the third routing identifier, the BAP address of the prior-hop node of the IAB-node and the BAP address of the next-hop node of the IAB-node belong to a network topological domain of the first donor-CU, a destination BAP address of the third routing identifier is the BAP address of the third donor-DU, and a destination BAP address of the first routing identifier is a BAP address of the first donor-DU.
51. The method according to Supplement 50, wherein, the path migration configuration further includes: releasing an inter-donor-CU routing identifier rewriting configuration used for indicating a mapping relationship between the first routing identifier and the second routing identifier, releasing a routing configuration used for indicating a mapping relationship between the second routing identifier and a BAP address of the next-hop node of the IAB-node, or releasing a second RLC channel mapping configuration used for indicating a mapping relationship between the address of the prior-hop node of the IAB-node, the ingress link RLC channel identifier, the BAP address of the next-hop node of the IAB-node and the egress link RLC channel identifier;
   wherein the first routing identifier and the BAP address of the prior-hop node of the IAB-node belong to a network topological domain of the first donor-CU, a destination BAP address of the first routing identifier is a BAP address of the first donor-DU, the second routing identifier and the BAP address of the next-hop node of the IAB-node belong to a network topological domain of the second donor-CU, and a destination BAP address of the second routing identifier is a BAP address of the second donor-DU.
52. The method according to Supplement 50 or 51, wherein, the method further includes:
   the IAB-node or child node receives configuration information used for configuring replacing an IP address anchored to the second donor-DU with an IP address anchored to the third donor-DU; wherein the IP addresses are used for F1 user plane data, F1 control plane data or non-F1 data of the IAB-node or the child node.
53. The method according to Supplement 52, wherein, the configuration information is IP address configuration information for the BAP address of the first donor-DU.
54. The method according to Supplement 53, wherein, the configuration information is used to change the IP address anchored to the second donor-DU for the BAP address of the first donor-DU to the IP address anchored to the third donor-DU.
55. A topology regression method, a transmission path of an uplink service of an IAB-node is migrated from a second donor centralized unit back to a first donor centralized unit, after being migrated from the first donor centralized unit (donor-CU) to the second donor centralized unit, and the method includes:
   the first donor-CU receives a topology regression request transmitted by the second donor-CU; and
   the first donor-CU transmits a path migration configuration of uplink data;
   wherein an IAB-DU of the IAB-node maintains F1 connection with the first donor-CU.
56. The method according to Supplement 55, wherein, a transmission path of an uplink service of the IAB-node is migrated from the second donor-DU of the second donor-CU back to the first donor-DU of the first donor-CU, after being migrated from the first donor distribution unit (donor-DU) of the first donor-CU to the second donor-DU of the second donor-CU.
57. The method according to Supplement 55, wherein, a transmission path of an uplink service of the IAB-node is migrated from the second donor-DU of the second donor-CU back to the third donor-DU of the first donor-CU, after being migrated from the first donor-DU of the first donor-CU to the second donor-DU of the second donor-CU.
58. The method according to any one of Supplements 55 to 57, wherein, the first donor-CU transmits the path migration configuration to the IAB-node or the child node via an F1AP message or an RRC message.
59. The method according to any one of Supplements 55 to 58, wherein, the topology regression request contains an IP address anchored to the second donor-DU, for a BAP address of the first donor-DU;
   wherein, the IP address is used for F1 user plane data, F1 control plane data or non-F1 data of the IAB-node or child node.
60. The method according to any one of Supplements 55 to 59, wherein, the method further includes:
   the first donor-CU transmits to the second donor-CU configuration information used for configuring replacing an IP address anchored to the second donor-DU with an IP address anchored to the first donor-DU, or configuration information used for configuring replacing an IP address anchored to the second donor-DU with an IP address anchored to the third donor-DU.
61. The method according to any one of Supplements 55 to 60, wherein, before or after an IAB-MT of the IAB-node is handed over from the second donor-CU back to the first donor-CU, the first donor-CU transmits path migration configuration of uplink data.
62. The method according to Supplement 61, wherein, before transmitting a handover request of being handed over back to the first donor-CU for the IAB-MT, the second donor-CU transmits the topology regression request to the first donor-CU.
63. The method according to Supplement 61, wherein, the second donor-CU contains the topology regression request in a handover request of being handed over back to the first donor-CU for the IAB-MT.
64. The method according to Supplement 63, wherein, the configuration information is contained in an RRC reconfiguration message contained in a handover request response message of being handed over back to the first donor-CU for the IAB-MT.
65. The method according to Supplement 61, wherein, after transmitting a handover request of being handed over back to the first donor-CU for the IAB-MT, the second donor-CU transmits the topology regression request to the first donor-CU.
66. The method according to any one of Supplements 55 to 60, wherein, after an IAB-MT of the IAB-node is reestablished to the second donor-CU, the donor-CU transmits path migration configuration of uplink data.
67. The method according to Supplement 66, wherein, the first donor-CU triggers the second donor-CU to transmit the topology regression request to the first donor-CU.
68. The method according to any one of Supplements 55 to 60, wherein, an IAB-MT of the IAB-node establishes a dual connection with the first donor-CU and the second donor-CU.
69. The method according to Supplement 68, wherein, the topology regression request contains identification information of a service whose transmission path is migrated from the second donor-CU back to the first donor-CU.
70. An IAB-node device, including a memory and a processor, the memory storing a computer program, wherein the processor is configured to execute a topology regression method according to any one of Supplements 1 to 54.
71. An IAB-donor device, including a memory and a processor, the memory storing a computer program, wherein the processor is configured to execute a topology regression method according to any one of Supplements 55 to 69.
72. A communication system, including an JAB-donor device and an IAB-node device; wherein the IAB-node device is configured to execute a topology regression method according to any one of Supplements 1 to 54, and the lAB-donor device is configured to execute a topology regression method according to any one of Supplements 55 to 69.

## Claims

1. An integrated access and backhaul (IAB) node device, wherein a transmission path of its uplink service is migrated from a second donor centralized unit back to a first donor centralized unit, after being migrated from the first donor centralized unit to the second donor centralized unit, and the device comprises:
a receiving portion configured to receive a path migration configuration of uplink data transmitted by a network device; and
a processing portion configured to apply the path migration configuration, wherein an IAB-DU of an IAB-node maintains F1 connection with the first donor centralized unit.

2. The device according to claim 1, wherein the transmission path of an uplink service of the IAB-node is migrated from a second donor distribution unit of the second donor centralized unit back to a first donor distribution unit of the first donor centralized unit, after being migrated from the first donor distribution unit of the first donor centralized unit to the second donor distribution unit of the second donor centralized unit;
the path migration configuration is transmitted by the first donor centralized unit to the IAB-node or a child node via an F1AP message or a radio resource control message.

3. The device according to claim 2, wherein the path migration configuration comprises: adding a routing configuration used for indicating a mapping relationship between a first routing identifier and a backhaul adaptation protocol address of a next-hop node of the IAB-node, and adding a first radio link control channel mapping configuration used for indicating a mapping relationship between a backhaul adaptation protocol address of a prior-hop node of the IAB-node, an ingress link radio link control channel identifier, a backhaul adaptation protocol address of the next-hop node of the IAB-node and an egress link radio link control channel identifier,
the first routing identifier, the backhaul adaptation protocol address of the prior-hop node of the IAB-node and the backhaul adaptation protocol address of the next-hop node of the IAB-node belonging to a network topological domain of the first donor centralized unit, and a destination backhaul adaptation protocol address of the first routing identifier being a backhaul adaptation protocol address of the first donor distribution unit.

4. The device according to claim 3, wherein the receiving portion receives the path migration configuration before the IAB-MT performs handover from the second donor centralized unit back to the first donor centralized unit;
the path migration configuration further comprises: releasing an inter-donor centralized unit routing identifier rewriting configuration used for indicating a mapping relationship between the first routing identifier and the second routing identifier, releasing a routing configuration used for indicating a mapping relationship between the second routing identifier and a backhaul adaptation protocol address of the next-hop node of the IAB-node, or releasing a second radio link control channel mapping configuration used for indicating a mapping relationship between the address of the prior-hop node of the IAB-node, the ingress link radio link control channel identifier, the backhaul adaptation protocol address of the next-hop node of the IAB-node and the egress link radio link control channel identifier;
wherein the first routing identifier and the backhaul adaptation protocol address of the prior-hop node of the IAB-node belong to a network topological domain of the first donor centralized unit, and the destination backhaul adaptation protocol address of the first routing identifier is a backhaul adaptation protocol address of the first donor distribution unit; and the second routing identifier and the backhaul adaptation protocol address of the next-hop node of the IAB-node belong to a network topological domain of the second donor centralized unit, and the destination backhaul adaptation protocol address of the second routing identifier is a backhaul adaptation protocol address of the second donor distribution unit.

5. The device according to claim 3, wherein the receiving portion further receives configuration information used for configuring replacing an IP address anchored to the second donor distribution unit with an IP address anchored to the first donor distribution unit; wherein the IP addresses are used for F1 user plane data, F1 control plane data or non-F1 data of the IAB-node or the child node.

6. The device according to claim 5, wherein the receiving portion receives the configuration information before the IAB-MT performs handover from the second donor centralized unit back to the first donor centralized unit;
the processing portion replaces the IP address anchored to the second donor distribution unit with the IP address anchored to the first donor distribution unit.

7. The device according to claim 5, wherein the configuration information of the IAB-node is transmitted via a handover command radio resource control message or a radio resource control reconfiguration message, and the configuration information of the child node is transmitted via a radio resource control reconfiguration message.

8. The device according to claim 5, wherein the configuration information is IP address configuration information for the backhaul adaptation protocol address of the first donor distribution unit;
the configuration information is used to change the IP address anchored to the second donor distribution unit for the backhaul adaptation protocol address of the first donor distribution unit to the IP address anchored to the first donor distribution unit address.

9. The device according to claim 1, wherein the transmission path of an uplink service of the IAB-node is migrated from a second donor distribution unit of the second donor centralized unit back to a third donor distribution unit of the first donor centralized unit, after being migrated from a first donor distribution unit of the first donor centralized unit to the second donor distribution unit of the second donor centralized unit;
the path migration configuration is transmitted by the first donor centralized unit to the IAB-node or the child node via an F1AP message or a radio resource control message.

10. The device according to claim 9, wherein the path migration configuration comprises: adding an inter-donor distribution unit routing identifier rewriting configuration used for indicating a mapping relationship between a first routing identifier and a third routing identifier, adding a routing configuration used for indicating a mapping relationship between the third routing identifier and a backhaul adaptation protocol address of a next-hop node of the IAB-node, and adding a first radio link control channel mapping configuration used for indicating a mapping relationship between a backhaul adaptation protocol address of a prior-hop node of the IAB-node, an ingress link radio link control channel identifier, a backhaul adaptation protocol address of a next-hop node of the IAB-node and an egress link radio link control channel identifier,
the first routing identifier, the third routing identifier, the backhaul adaptation protocol address of the prior-hop node of the IAB-node and the backhaul adaptation protocol address of the next-hop node of the IAB-node belonging to a network topological domain of the first donor centralized unit, a destination backhaul adaptation protocol address of the third routing identifier being a backhaul adaptation protocol address of the third donor distribution unit, and the destination backhaul adaptation protocol address of the first routing identifier being a backhaul adaptation protocol address of the first donor distribution unit.

11. The device according to claim 10, wherein the receiving portion receives the path migration configuration before the IAB-MT performs handover from the second donor centralized unit back to the third donor centralized unit;
the path migration configuration further comprises: releasing an inter-donor centralized unit routing identifier rewriting configuration used for indicating a mapping relationship between the first routing identifier and the second routing identifier, releasing a routing configuration used for indicating a mapping relationship between the second routing identifier and a backhaul adaptation protocol address of the next-hop node of the IAB-node, or releasing a second radio link control channel mapping configuration used for indicating a mapping relationship between the address of the prior-hop node of the IAB-node, the ingress link radio link control channel identifier, the backhaul adaptation protocol address of the next-hop node of the IAB-node and the egress link radio link control channel identifier;
wherein the first routing identifier and the backhaul adaptation protocol address of the prior-hop node of the IAB-node belong to a network topological domain of the first donor centralized unit, and the destination backhaul adaptation protocol address of the first routing identifier is a backhaul adaptation protocol address of the first donor distribution unit; and the second routing identifier and the backhaul adaptation protocol address of the next-hop node of the IAB-node belong to a network topological domain of the second donor centralized unit, and the destination backhaul adaptation protocol address of the second routing identifier is a backhaul adaptation protocol address of the second donor distribution unit.

12. The device according to claim 10, wherein the receiving portion further receives configuration information used for configuring replacing an IP address anchored to the second donor distribution unit with an IP address anchored to the third donor distribution unit; wherein the IP addresses are used for F1 user plane data, F1 control plane data or non-F1 data of the IAB-node or the child node.

13. The device according to claim 12, wherein the receiving portion receives the configuration information before the IAB-MT performs handover from the second donor centralized unit back to the first donor centralized unit;
the processing portion replaces the IP address anchored to the second donor distribution unit with an IP address anchored to the third donor distribution unit.

14. The device according to claim 12, wherein the configuration information of the IAB-node is transmitted via a handover command radio resource control message or a radio resource control reconfiguration message, and the configuration information of the child node is transmitted via a radio resource control reconfiguration message.

15. The device according to claim 12, wherein the configuration information is IP address configuration information for the backhaul adaptation protocol address of the first donor distribution unit;
the configuration information is used to change the IP address anchored to the second donor distribution unit for the backhaul adaptation protocol address of the first donor distribution unit to the IP address anchored to the third donor distribution unit address.

16. An IAB-donor device, wherein a transmission path of an uplink service of an IAB-node is migrated from a second donor centralized unit back to a first donor centralized unit, after being migrated from the first donor centralized unit to the second donor centralized unit, and the device comprises:
a receiving portion configured to receive a topology regression request transmitted by the second donor centralized unit; and
a transmitting portion configured to transmit a path migration configuration of uplink data;
wherein an IAB-DU of the IAB-node maintains F1 connection with the first donor centralized unit.

17. The device according to claim 16, wherein the transmitting portion transmits the path migration configuration to the IAB-node or a child node via an F1AP message or a radio resource control message;
the topology regression request contains an IP address anchored to a second donor distribution unit for a backhaul adaptation protocol address of a first donor distribution unit; wherein the IP addresses are used for F1 user plane data, F1 control plane data or non-F1 data of the IAB-node or child node.

18. The device according to claim 16, wherein the transmitting portion transmits configuration information used for configuring replacing an IP address anchored to a second donor distribution unit with an IP address anchored to a first donor distribution unit, or configuration information used for configuring replacing an IP address anchored to the second donor distribution unit with an IP address anchored to a third donor distribution unit, to the second donor centralized unit.

19. The device according to claim 16, wherein the transmitting portion transmits the path migration configuration of uplink data before or after an IAB-MT of the IAB-node is handed over from the second donor centralized unit back to the first donor centralized unit;
or, the transmitting portion transmits the path migration configuration of the uplink data after the IAB-MT of the IAB-node is reestablished to the second donor centralized unit;
or, the IAB-MT of the IAB-node establishes dual connection with the first donor centralized unit and the second donor centralized unit.

20. An integrated access and backhaul (IAB) system, including an IAB-donor device and an IAB-node device,
a transmission path of an uplink service of the IAB-node device being migrated from a second donor centralized unit back to a first donor centralized unit, after being migrated from the first donor centralized unit to the second donor centralized unit; wherein the IAB-node device receives a path migration configuration of uplink data transmitted by a network device, and applies the path migration configuration, wherein an IAB-DU of the IAB-node maintains F1 connection with the first donor centralized unit.
